# EUROPEAN PATENT SPECIFICATION

(11) **EP 1 350 675 B1**
(45) Date of publication and mention of the grant of the patent: **30.12.2015**
(21) Application number: 03466007.6
(22) Date of filing: 01.04.2003
(51) Int. Cl.: E05B 83/30, E05B 81/06

(54) **Glove compartment**
Handschuhfach
Boîte à gants

(30) Priority: 03.04.2002 CZ 20021154
(43) Date of publication of application: 08.10.2003
(73) Proprietor: Skoda Auto a.s., 293 60 Mlada Boleslav (CZ)
(72) Inventor: Kutil, Jaroslav, 294 71 Benatky nad Jizerou (CZ); Paldus, Petr, 408 01 Rumburk (CZ)

(56) References cited:
- EP-A1- 0 352 176
- DE-A1- 19 530 722
- DE-C1- 3 728 960
- DE-U1- 8 514 605
- FR-A1- 2 740 404
- US-A- 2 313 712

## Description

The invention applies to the glove compartment, mainly in a motor vehicle, which is equipped with an operating mechanism to secure, respectively, release and lock the lid of the glove compartment.

Currently, the glove compartment is used in motor vehicles where the operating mechanism consists of individual functional details, which are located inside the glove compartment lid. Usually, this concerns two rods, which are operated using a lever, optionally, toothed gears from the handle on the lid. The detent is in the counter part of the lid, usually in the glove compartment itself. The return of the rod is spring-activated.

The full mechanism, i.e. the rods, gears, handle, springs, etc. are in principle installed in the outer part of the lid and covered by the inner part, which is welded to the outer part of the lid. Such a full lid, however, raises some problems when used in operating conditions. The cited mechanism, which is in principle inside the non-demountable box, cannot in case of fault be repaired. If there is a production fault, it is possible to ascertain this fact only after completion of the full compartment. In both cases, it is essential to replace the full lid of the glove compartment. In case of wear of the mechanism during normal operations, it is again essential to replace the full lid of the glove compartment in order to ensure its function. Another elemental disadvantage of these solutions is the reduction of the actual utility space of the glove compartment because the mechanism mounted on the glove compartment lid essentially increases the requirement for its installation. A potential danger here seems to be also the risk of noise from the mechanism that could arise during operation of the motor vehicle.
JP 7-82941 discloses a glove compartment for a motor vehicle consisting of a repository box, a closing lid and an operating mechanism whereby the operating mechanism is attached to the upper surface of the glove compartment.

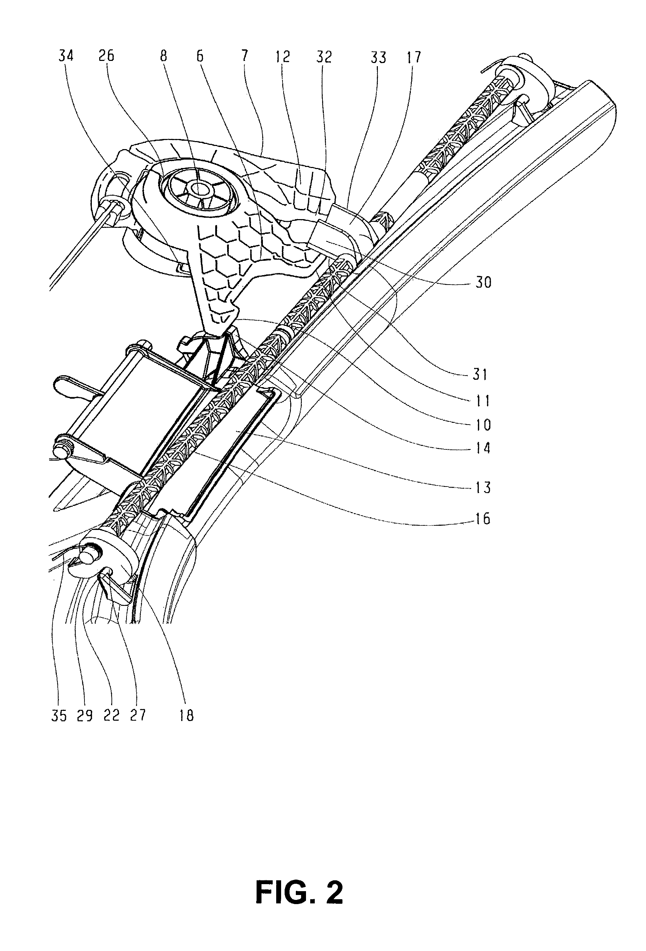

The deficiencies stated above to a certain degree are eliminated by a glove compartment, mainly in a motor vehicle, which consists of a repository box, a closing lid of the glove compartment and operating mechanism, whereby the operating mechanism is attached to the upper surface of the glove compartment. The operating mechanism of the glove compartment consists of a rotary opening element which has a nose, a rotary locking element, which has an operating nose and a blocking stop, a rotating handle that comprises an operating calk and is attached to the supporting frame and a rotary connecting spindle that comprises an arresting projection and is attached to the supporting frame. The arresting projection of the connecting spindle acts together with the nose of the rotary locking element and the blocking stop of the rotary opening element and at the same time the operating calk of the rotating handle acts together with the operating nose of the rotary opening element. The operation of the locking element is via the rods connected to the linear electric motor attached to the upper surface of the glove compartment.
The invention shall further be explained with the aid of drawings, on which Fig. 1 shows the axonometric view of the glove compartment with the operating mechanism and a part of the dashboard, Fig. 2 shows the axonometric, detail of the glove compartment operating mechanism, Fig. 3 shows the axonometric view of the released glove compartment operating mechanism, Fig. 4 shows the axonometric view of the secured glove compartment operating mechanism, Fig. 5 shows the axonometric view of the locked glove compartment operating mechanism.

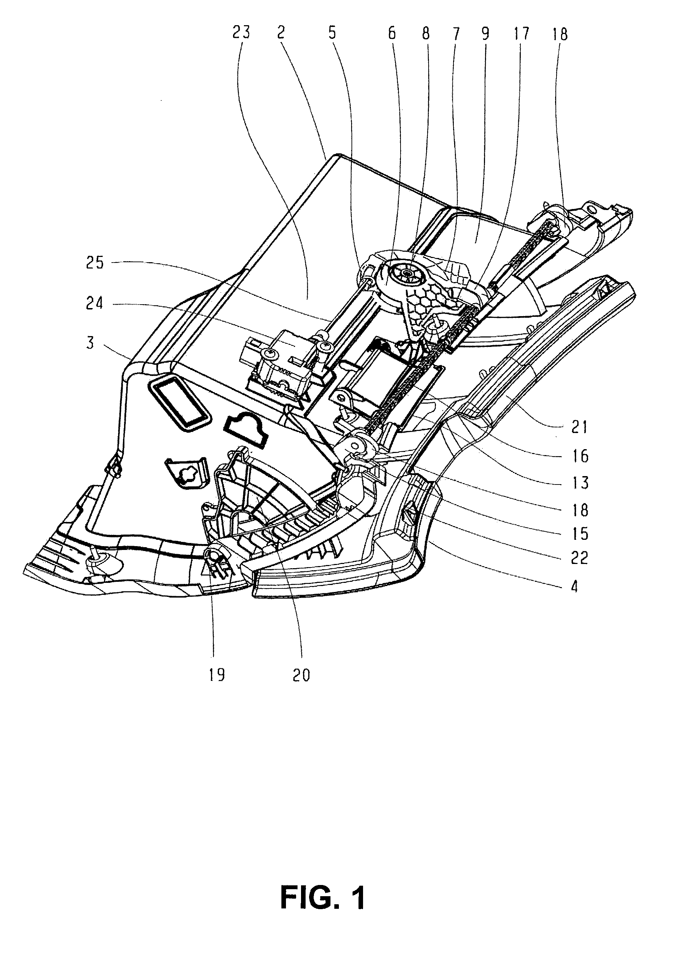

As it is clear from Fig. 1, the glove compartment 2 consist of a repository box 3, hinged closing lid 4 and an operating mechanism 5. The operating mechanism 5 of the glove compartment consists of a rotary opening element 6 and a rotary locking element 7, which are coaxial, in rotary fashion attached to the pin 8 on the supporting frame 9 of the glove compartment 2 in the dashboard. The rotary opening element 6 has an operating nose 10 and a blocking stop 11 and the rotary locking element 7 has a nose 12. Attached to pin the 8 is a spring 26, which acts anti-clockwise on the rotary opening element 6 and a spring 34, which acts on the rotary locking element 7, also anti-clockwise. On the supporting frame 9 of the glove compartment 2 is a rotary handle 13, which has an operating calk 14, which acts together with the operating nose 10 of the rotary opening element 6. On the front part of the supporting frame 9 of the glove compartment 2 are attaching elements 15 on both sides that hold a rotary connecting spindle 16, which has an arresting projection 17 and securing hooks 18 on both sides with notches 27 and that have leading edges 29. On both sides of the lower section of the glove compartment 2 are two holders 19, in which a lever 20 is set to which the closing lid 4 is attached and that is on both edges of the upper edge 21 equipped with securing pins 22. On the upper surface 23 of the glove compartment 2 a linear electric motor 24 is attached in the left section - in the direction of travel - that via rods 25 is connected to the rotary locking element. 7

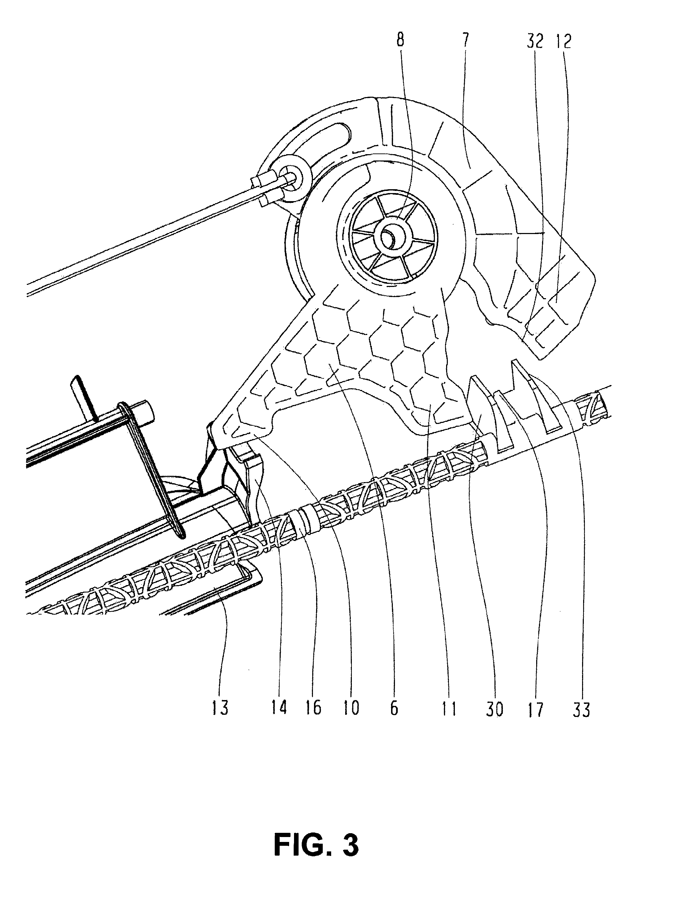

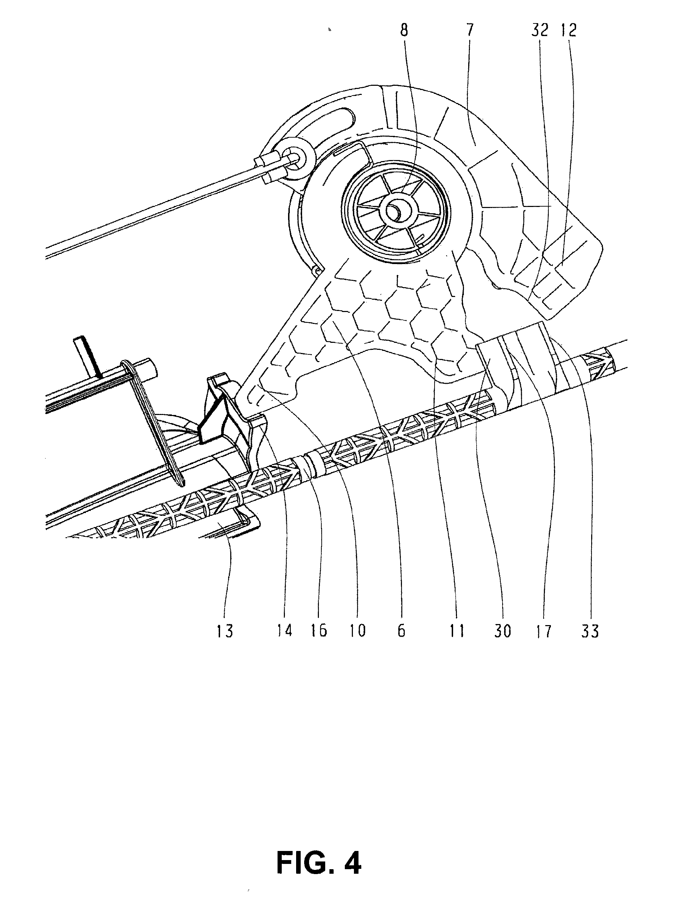

As it is clear from Fig. 4, secured position of the operating mechanism with the closing lid 4 closed, the securing pins 22 of the closing lid 4 are arrested in the notches 27 of the securing hooks 18, while the arresting projection 17 on the connecting spindle 16 props against the blocking stop 11 of the rotary opening element 6. By lifting the rotating handle 13 via the operating calk 14, which applies pressure to the operating nose 10, the rotary opening element 6 turns by which blocking stop 11 disengages from the arresting projection 17 of the connecting spindle 16. The action of a spring 35 leads to the rotation of the connecting spindle 16 and hence also the securing hook 18, such that the securing pins 22 of the closing lid are released, which under action of own weight, optionally, a spring (not shown) tilts to open position (see Fig. 3).

When closing the lid 4, the securing pins 22 act on the leading edges 29 of the securing hooks 18, thus turning the connecting spindle 16. Concurrently with its turn, a slanting leading edge 30 pushes the arresting projection 17 over the operating nose 11 of the rotary opening element 6. In the position where a lower edge 31 of the arresting projection 17 gets above the operating nose 11, a spring 26 acts and turns the rotary opening element 6 anti-clockwise, such that the mechanism is in secured position, as it clear from Fig. 4. At the same time, the securing pins 22 hook into the notches 27 of the securing hooks 18, which hold the closing lid 4 in closed position (see Fig. 4). Locking of the closing lid 4 of the glove compartment 2 is done in such a way that after transmission of a signal to the linear electric motor 24 via action on the rod 25 the rotary locking element 7 is turned in a clockwise direction. This blocks the arresting projection 17 of the connecting spindle 16 even in a case where the rotating handle 13 is lifted over the operating calk 14, which turns the rotary opening element 6 and shifts the blocking stop 11 out of the reach of the arresting projection 17. By turning the rotary locking element 7 the nose 12 slides below the arresting projection 17, thus blocking the connecting spindle 16 against turning and thus also eventual release of the closing lid 4 of the glove compartment 2.

If the mechanism is locked and the closing lid 4 is not in closed position; upon the linear electric motor 24 acting on and turning the rotary locking element 7, there is an impact of the pressing edges 32 of the nose 12 on the slanted leading edge 33 of the arresting projection 17. This presses off the rotary locking element 7 via a return spring 34, also located on the pin 8 as long as the closing lid 4 is not closed whereby the securing pins 22 act on the leading edges 29 of the securing hooks 18, which leads to the rotation of the connecting spindle 16. At the same time as the turn, it slides over slanted leading edges 30 and 33 of the arresting projection 17 from one side over the operating nose 11 of the rotary opening element 6 and from the other side over the operating nose 12 of the rotary locking element 7.

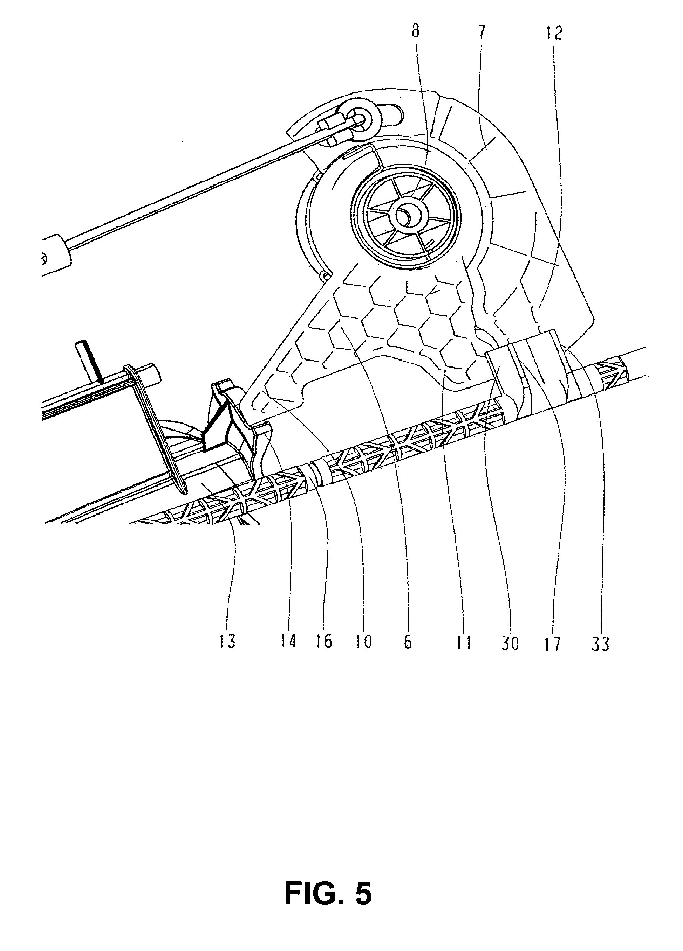

In a position where the lower edge 31 of the arresting projection 17 gets above the operating noses 11 and 12, the spring 34 acts and turns the rotary locking element 7 in clockwise direction, such that the mechanism is in secured and at the same time locked position according to Fig. 5.

This equipment as outlined in the invention may be used in most of the means of transport at all points where it is essential to create a reclosable storage space for small items.

## Claims

1. A glove compartment (2) mainly of a motor vehicle comprising:
a repository box (3);
a closing lid (4);
an operating mechanism (5) being attached to the upper surface of said glove compartment (2);
said operating (5) consists of one rotary opening element (6) having an operating nose (10) and a blocking stop (11);
a rotary locking element (7);
a rotating handle (13) which comprises an operating calk (14) and is attached to the supporting frame (9);
and a rotary connecting spindle (16) which comprises an arresting projection (17) and is attached to the supporting frame (9);
where with the said closing lid (4) closed, by lifting the rotating handle (13) the operating calk (14) will apply pressure to the operating nose (10) of the rotary operating element (6) such that the blocking stop (11) disengages from the arresting projection (17) of the rotary connecting spindle (16),
whereby the connecting spindle is allowed to rotate and the closing lid (4) is released and can tilt to the open position,
whereas when closing the said closing lid (4) the connecting spindle (16) turns in the opposite direction such that the arresting projection (17) gets above the blocking stop (11), whereby rotation of the connecting spindle (16) in the first direction is prevented and the closing lid (4) is therefore held in its closed position, and where the said locking element (7) has a nose (12) and by turning the locking element (7) when the closing lid (4) is closed, its nose (12) can slide below the arresting projection (17) thereby blocking rotation of the arresting projection (17) and the connecting spindle (16) even if the rotating handle (13) would be turned.

2. The glove compartment (2) according to claim 1 where the arresting projection (17) of the connecting spindle (16) co-acts with the nose (12) of the rotary locking element (7) and the blocking stop (11) of the rotary opening element (6) and at the same time the operating calk (14) of the handle (13) co-act with the operating nose (10) of the rotary opening element (6).

3. The glove compartment (2) according to any one of claims 1 to 2 where the locking element is linked via a rod to a linear electric motor (24) attached to the upper surface of the glove compartment (24).

## Patentansprüche

1. Handschuhfach (2), in der Hauptsache eines Kraftfahrzeugs, das Folgendes umfasst:
eine Ablagebox (3), einen Verschlussdeckel (4), einen Betätigungsmechanismus (5), der an der oberen Oberfläche des Handschuhfachs (2) befestigt ist, wobei der Betätigungsmechanismus (5) aus einem Drehöffnungselement (6) besteht, das eine Betätigungsnase (10) und einen Blockierungsanschlag (11) umfasst, ein Drehverriegelungselement (7), einen Drehgriff (13), der ein Betätigungselement (14) umfasst und an dem Stützrahmen (9) befestigt ist, und eine Drehverbindungsspindel (16), die einen Stoppvorsprung (17) umfasst und an dem Stützrahmen (9) befestigt ist, wobei bei dem geschlossenen Verschlussdeckel (4) durch das Heben des Drehgriffs (13) das Betätigungselement (14) Druck auf die Betätigungsnase (10) des Drehbetätigungselements (6) derart ausübt, dass der Blockierungsanschlag (11) aus dem Stoppvorsprung (17) der Drehverbindungsspindel (16) ausrückt, wodurch es der Verbindungsspindel erlaubt wird, zu drehen und der Verschlussdeckel (4) freigegeben wird und zu der offenen Position schwenken kann, während beim Schließen des Verschlussdeckels (4) die Verbindungsspindel (16) derart in die entgegengesetzte Richtung dreht, dass der Stoppvorsprung (17) über den Blockierungsanschlag (11) gerät, wodurch die Drehung der Verbindungsspindel (16) in die erste Richtung verhindert wird und der Verschlussdeckel (4) daher in seiner geschlossenen Position gehalten wird, und wobei das Verriegelungselement (7) eine Nase (12) hat und durch Drehen des Verriegelungselements (7), wenn der Verschlussdeckel (4) geschlossen ist, seine Nase (12) unter den Stoppvorsprung (17) gleiten kann, wodurch die Drehung des Stoppvorsprungs (17) und der Verbindungsspindel (16) sogar blockiert wird, wenn der Drehgriff (13) gedreht wird.

2. Handschuhfach (2) nach Anspruch 1, wobei der Stoppvorsprung (17) der Verbindungsspindel (16) mit der Nase (12) des Drehverriegelungselements (7) zusammenwirkt und der Blockierungsanschlag (11) des Drehöffnungselements (6) und gleichzeitig das Betätigungselement (14) des Griffs (13) mit der Betätigungsnase (10) des Drehöffnungselements (6) zusammenwirken.

3. Handschuhfach (2) nach einem der Ansprüche 1 bis 2, wobei das Verriegelungselement über eine Stange mit einem linearen Elektromotor (24), der an der oberen Oberfläche des Handschuhfachs (2) befestigt ist, verbunden ist.

## Revendications

1. Boîte à gants (2) principalement pour un véhicule automobile, comprenant :
une boîte de réception (3) ;
un couvercle de fermeture (4) ;
un mécanisme d'actionnement (5) attaché à la surface supérieure de ladite boîte à gants (2) ;
ledit mécanisme d'actionnement (5) étant constitué d'un élément d'ouverture rotatif (6) ayant un nez d'actionnement (10) et une butée de blocage (11) ;
un élément de verrouillage rotatif (7) ;
une poignée rotative (13) qui comprend un joint d'actionnement (14) et qui est attachée au cadre de support (9) ;
et une broche de connexion rotative (16) qui comprend une saillie de blocage (17) et qui est attachée au cadre de support (9) ;
le joint d'actionnement (14), lorsque ledit couvercle de fermeture (4) est fermé, par soulèvement de la poignée rotative (13),
appliquant une pression au nez d'actionnement (10) de l'élément d'actionnement rotatif (6) de telle sorte que la butée de blocage (11) se désengage de la saillie de blocage (17) de la broche de connexion rotative (16), la broche de connexion pouvant alors tourner et le couvercle de fermeture (4) étant libéré et pouvant basculer dans la position ouverte,
tandis que, lors de la fermeture dudit couvercle de fermeture (4), la broche de connexion (16) tourne dans la direction opposée de telle sorte que la saillie de blocage (17) passe au-dessus de la butée de blocage (11), la rotation de la broche de connexion (16) dans la première direction étant ainsi empêchée et le couvercle de fermeture (4) étant ainsi retenu dans sa position fermée, et
ledit élément de verrouillage (7) présentant un nez (12), et lors de la rotation de l'élément de verrouillage (7), lorsque le couvercle de fermeture (4) est fermé, son nez (12) pouvant glisser en dessous de la saillie de blocage (17) pour ainsi bloquer la rotation de la saillie de blocage (17) et de la broche de connexion (16) même si la poignée rotative (13) est tournée.

2. Boîte à gants (2) selon la revendication 1, dans laquelle la saillie de blocage (17) de la broche de connexion (16) coopère avec le nez (12) de l'élément de verrouillage rotatif (7) et avec la butée de blocage (11) de l'élément d'ouverture rotatif (6) et en même temps, le joint d'actionnement (14) de la poignée (13) coopère avec le nez d'actionnement (10) de l'élément d'ouverture rotatif (6).

3. Boîte à gants (2) selon l'une quelconque des revendications 1 et 2, dans laquelle l'élément de verrouillage est relié par le biais d'une tige à un moteur électrique linéaire (24) attaché à la surface supérieure de la boîte à gants (24).
